# EUROPEAN PATENT APPLICATION

(11) **EP 3 296 266 A1**
(43) Date of publication of application: **21.03.2018**
(21) Application number: 16796545.8
(22) Date of filing: 12.05.2016
(51) Int. Cl.: C01F 5/40, C08K 9/04, C08L 101/00, D06M 13/292, D06M 13/463

(54) **FIBROUS BASIC MAGNESIUM SULFATE, MANUFACTURING METHOD THEREFOR AND RESIN COMPOSITION THEREOF**

(30) Priority: 15.05.2015 JP 2015099708
(71) Applicant: Kyowa Chemical Industry Co., Ltd, Takamatsu-shi, Kagawa 761-0113 (JP)
(72) Inventor: SAITO Tateharu, Sakaide-shi Kagawa 762-0012 (JP); MIYATA Shigeo, Sakaide-shi Kagawa 762-0012 (JP)
(74) Representative: J A Kemp
(86) International application number: PCT/JP2016/064805
(87) International publication number: WO 2016/186152

(57) **Abstract**

Fibrous basic magnesium sulfate having excellent acid resistance.

A fibrous powder comprising the fibrous basic magnesium sulfate, and an anionic surfactant (A) and a cationic surfactant (B), both coating the surface of the fibrous basic magnesium sulfate.

## Description

### TECHNICAL FIELD

The present invention relates to fibrous basic magnesium sulfate which is coated with an anionic surfactant (A) and a cationic surfactant (B) and has improved acid resistance, a production process therefor and a resin composition thereof.

### BACKGROUND ART

Fibrous basic magnesium sulfate is biologically safe though it is fibrous and used as a resin reinforcing agent. It is known that a resin composition prepared by melt kneading a resin with a fibrous basic magnesium sulfate powder has an improved flexural modulus. Patent Document 1 discloses basic magnesium sulfate fibers which have an average fiber length of fibers contained in primary fibers of 7 to 10 µm and a ratio of the primary fibers containing fibers having a fiber length of not less than 20 µm of not more than 10 wt% and are surface treated with Montan wax to improve the stiffness and impact strength of polypropylene resin and a production process therefor.

However, when fibrous basic magnesium sulfate is mixed with a resin as a reinforcing agent for automotive exterior materials, there occurs a problem that blisters are formed after coating. This is because the acid resistance of fibrous basic magnesium sulfate is low and this material is dissolved by an acidic coating material, thereby producing water. However, a solution to this problem has not been proposed up till now.
(Patent Document 1) JP-A 2003-73927

### DISCLOSURE OF THE INVENTION

It is an object of the present invention to provide fibrous basic magnesium sulfate having excellent acid resistance. It is another object of the present invention to provide a resin composition which comprises fibrous basic magnesium sulfate and hardly causes the peeling of an applied coating material and the formation of blisters. More specifically, when the resin composition is applied to an automotive exterior material, the peeling of the coating and the formation of blisters are suppressed.

Heretofore, it has been considered that the crystal surface of a magnesium hydroxide-based compound is positively charged. Therefore, an anionic surfactant has been used for a surface treatment to improve acid resistance. However, satisfactory acid resistance could not be obtained only by the surface treatment of fibrous basic magnesium sulfate with an anionic surfactant.

The inventors of the present invention conducted intensive studies and discovered that a site having positive charge and a site having negative charge are existent on the surface of a fibrous basic magnesium sulfate crystal. Based on this discovery, they found that, when the site having positive charge on the surface of the fibrous basic magnesium sulfate crystal is coated with an anionic surfactant (A) and the site having negative charge is coated with a cationic surfactant (B), high water repellency is provided to the entire surface of the crystal, thereby making it possible to provide excellent acid resistance.

That is, the present invention includes the following inventions.
1. A fibrous powder comprising fibrous basic magnesium sulfate, and an anionic surfactant (A) and a cationic surfactant (B), both coating the surface of the fibrous basic magnesium sulfate.
2. The fibrous powder in the above paragraph 1, wherein the coating amount of the anionic surfactant (A) is 0.1 to 10 wt% based on the fibrous basic magnesium sulfate.
3. The fibrous powder in the above paragraph 1, wherein the coating amount of the cationic surfactant (B) is 0.1 to 10 wt% based on the fibrous basic magnesium sulfate.
4. The fibrous powder in the above paragraph 1 which has an average fiber length of 10 to 100 µm, an average fiber diameter of 0.1 to 2 µm and an average aspect ratio of 10 to 1,000.
5. The fibrous powder in the above paragraph 1, wherein the chemical composition of the fibrous basic magnesium sulfate is Mg₆(OH)₁₀·SO₄·3H₂O.
6. The fibrous powder in the above paragraph 1, wherein the anionic surfactant (A) is at least one selected from the group consisting of carboxylic acid, sulfonic acid, sulfuric acid ester, phosphoric acid ester and salts thereof and has a hydrocarbon group having 10 to 40 carbon atoms as a hydrophobic group.
7. The fibrous powder in the above paragraph 1, wherein the anionic surfactant (A) is at least one selected from compounds represented by the following formulas (1) and (2). 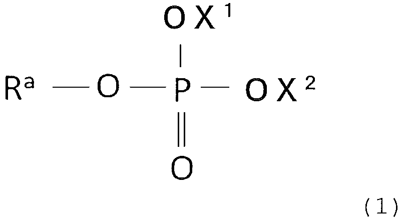 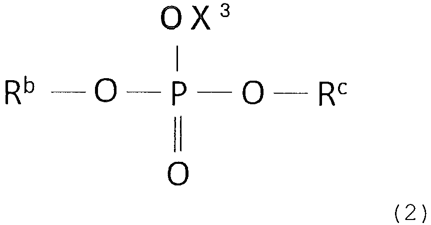 (In the above formulas, R^{a}, R^{b} and R^{c} are the same or different and each a hydrocarbon group having 10 to 40 carbon atoms, and X¹, X² and X³ are the same or different and each a hydrogen atom or an alkali metal atom.)
8. The fibrous powder in the above paragraph 1, wherein the cationic surfactant (B) is at least one selected from the group consisting of amine salts and quaternary ammonium salts and has a hydrocarbon group having 10 to 40 carbon atoms as a hydrophobic group.
9. The fibrous powder in the above paragraph 1, wherein the cationic surfactant (B) is a quaternary ammonium salt represented by the following formula (3). 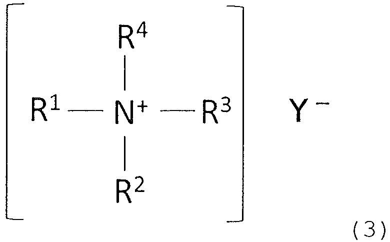 (In the above formula, R¹ and R² are the same or different and each a hydrocarbon group having 1 to 6 carbon atoms, and R³ and R⁴ are the same or different and each a hydrocarbon group having 10 to 40 carbon atoms. Y⁻ is a chlorine ion or a bromine ion.)
10. The fibrous powder in the above paragraph 1, wherein the time from the start of injecting 5.15 mL of 0.1 N sulfuric acid to the end of injection is 10 minutes or longer in the following acid resistance testing method. (acid resistance testing method)
   2 mL of 32°C ethanol and a rotor are put into a beaker heated at 32°C, and the beaker is immersed in a thermostat (32°C) to start stirring. After 1 minute, 0.1 g of a sample is injected into the beaker. One minute after the injection of the sample, 40 mL of 32°C water is injected and a set of a pH meter electrode and a burette is immersed in the beaker. One minute after the injection of water, an automatic titrator (manufactured by DKK-TOA Corporation) is used to add 0.1N sulfuric acid so that the pH of the test slurry always becomes 4.0 and the temperature thereof becomes 32°C. Titration is terminated when 5. 15 mL of 0.1N sulfuric acid is added. Acid resistance is evaluated by a time from the start of adding 5.15 mL of 0.1N sulfuric acid to the end of addition.
11. A resin composition comprising 100 parts by weight of a resin and 0.1 to 200 parts by weight of the fibrous powder of the above paragraph 1.
12. A molded product of the resin composition of the above paragraph 11.
13. A process for producing the fibrous powder of the above paragraph 1, comprising the steps of
   (i) dispersing fibrous basic magnesium sulfate in water, an organic solvent or a mixture thereof to prepare slurry;
   (ii) adding any one of an anionic surfactant (A) treatment solution and a cationic surfactant (B) treatment solution to the slurry under agitation; and
   (iii) adding the other treatment solution to the slurry under agitation.
14. The production process in the above paragraph 13, wherein 0.1 to 10 wt% of the anionic surfactant (A) and 0.1 to 10 wt% of the cationic surfactant (B) are added based on the fibrous basic magnesium sulfate.
15. The production process in the above paragraph 13, wherein a solution containing the anionic surfactant (A) is added to the slurry after a solution containing the cationic surfactant (B) is added.

### BEST MODE FOR CARRYING OUT THE INVENTION

The present invention will be described in detail hereinunder.

### <fibrous basic magnesium sulfate>

The average fiber length, average fiber diameter and average aspect ratio of fibrous basic magnesium sulfate are given below. The average fiber length, average fiber diameter and average aspect ratio do not substantially change even when the fibrous basic magnesium sulfate is coated with the anionic surfactant (A) and the cationic surfactant (B). (average fiber length)

Preferably, the fibrous basic magnesium sulfate has an average fiber length of 10 to 100 µm. The upper limit of the average fiber length is more preferably 80 µm, much more preferably 60 µm. The lower limit of the average fiber length is more preferably 20 µm, much more preferably 30 µm. The average fiber length is obtained from the arithmetic mean of measurement values of the fiber lengths of 10 arbitrary crystals in a SEM photo of the fibrous basic magnesium sulfate.

### (average fiber diameter)

Preferably, the fibrous basic magnesium sulfate has an average fiber diameter of 0.1 to 2 µm. The upper limit of the average fiber diameter is more preferably 1 µm, much more preferably 0.6 µm. The lower limit of the average fiber diameter is more preferably 0.2 µm, much more preferably 0.3 µm. The average fiber diameter is obtained from the arithmetic mean of measurement values of the fiber diameters of 10 arbitrary crystals in a SEM Photo of the fibrous basic magnesium sulfate.

### (average aspect ratio)

Preferably, the fibrous basic magnesium sulfate has an average aspect ratio (fiber length/fiber diameter) of 10 to 1,000. The upper limit of the average aspect ratio is more preferably 500, much more preferably 200. The lower limit of the average aspect ratio is more preferably 20, much more preferably 40. The average aspect ratio is obtained from the arithmetic mean of the aspect ratios (fiber length/fiber diameter) of 10 arbitrary crystals in a SEM photo of the fibrous basic magnesium sulfate.

Preferably, the fibrous powder of the present invention has an average fiber length of 10 to 100 µm, an average fiber diameter of 0.1 to 2 µm and an average aspect ratio of 10 to 1,000.

The chemical composition of the fibrous basic magnesium sulfate is preferably Mg₆(OH)₁₀·SO₄·3H₂O.

### <anionic surfactant (A)>

Preferably, the anionic surfactant (A) is at least one selected from the group consisting of carboxylic acid, sulfonic acid, sulfuric acid ester, phosphoric acid ester and salts thereof and has a hydrocarbon group having 10 to 40 carbon atoms as a hydrophobic group. An anionic surfactant having a hydrophobic group having 10 or more carbon atoms is preferably used to provide high water repellency to the fibrous basic magnesium sulfate. The upper limit of the number of carbon atoms of the hydrophobic group is preferably 38, more preferably 36. The lower limit of the number of carbon atoms of the hydrophobic group is preferably 12, more preferably 14.

The anionic surfactant (A) is preferably at least one selected from compounds represented by the following formulas (1) and (2).

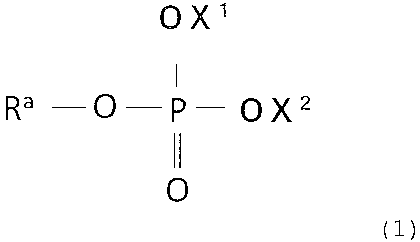

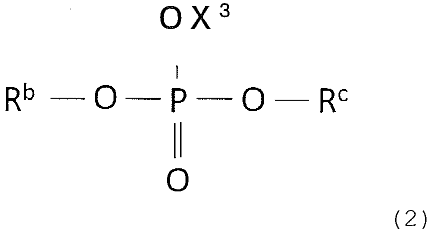

In the above formulas, R^{a}, R^{b} and R^{c} are the same or different and each a hydrocarbon group having 10 to 40, preferably 12 to 38, more preferably 14 to 36 carbon atoms. Examples of the hydrocarbon group include alkyl groups and acyl groups. The alkyl groups include decyl group, dodecyl group, tetradecyl group, hexadecyl group and octadecyl group. The acyl groups include lauroyl group, palmitoyl group, stearoyl group and oleoyl group.

X¹, X² and X³ are the same or different and each a hydrogen atom or an alkali metal atom.

Examples of the anionic surfactant (A) include sodium lauryl sulfate, sodium polyoxyethylene lauryl ether sulfate, triethanolamine polyoxyethylene alkyl ether sulfate, sodium dodecylbenzene sulfonate, sodium alkyl naphthalene sulfonate, sodium dialkyl sulfosuccinate, sodium alkyl diphenyl ether disulfonate, ammonium polyoxyalkylene alkenyl ether sulfate, sodium stearate, sodium oleate, dipotassium alkenyl succinate, polyoxyethylene tridecyl ether phosphoric acid ester, polyoxyethylene lauryl ether phosphoric acid ester and distearyl phosphoric acid. The anionic surfactant (A) is not limited to these treating agents.

The coating amount of the anionic surfactant (A) is preferably 0.1 to 10 wt% based on the fibrous basic magnesium sulfate. The upper limit of the coating amount of the anionic surfactant (A) is preferably 8 wt%, more preferably 5 wt% based on the fibrous basic magnesium sulfate. The lower limit of the coating amount of the anionic surfactant (A) is preferably 0.5 wt%, more preferably 1 wt% based on the fibrous basic magnesium sulfate.

### <cationic surfactant (B)>

Preferably, the cationic surfactant (B) is at least one selected from the group consisting of amine salts and quaternary ammonium salts and has at least one hydrocarbon group having 10 to 40 carbon atoms as a hydrophobic group. A cationic surfactant having at least one hydrophobic group having 10 or more carbon atoms is preferably used to provide high water repellency to the fibrous basic magnesium sulfate. The upper limit of the number of carbon atoms of the hydrophobic group is more preferably 38, much more preferably 36. The lower limit of the number of carbon atoms of the hydrophobic group is more preferably 12, much more preferably 14.

The cationic surfactant (B) is preferably a quaternary ammonium salt represented by the following formula (3).

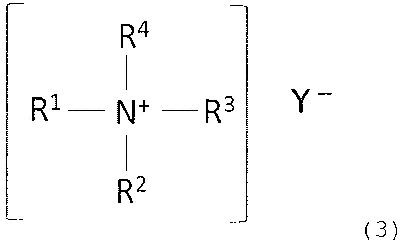

In the above formula, R¹ and R² are the same or different and each a hydrocarbon group having 1 to 6 carbon atoms. The number of carbon atoms of the hydrocarbon group is preferably 1 to 4, more preferably 1 to 2. Examples of the hydrocarbon group include alkyl groups and acyl groups. The alkyl groups include methyl group, ethyl group, propyl group, butyl group, pentyl group and hexyl group. The acyl groups include formyl group, acetyl group and propionyl group.

R³ and R⁴ are the same or different and each a hydrocarbon group having 10 to 40 carbon atoms. The number of carbon atoms of the hydrocarbon group is preferably 12 to 38, more preferably 14 to 36. Examples of the hydrocarbon group include alkyl groups and acyl groups. The alkyl groups include decyl group, dodecyl group, tetradecyl group, hexadecyl group and octadecyl group. The acyl groups include lauroyl group, palmitoyl group, stearoyl group and oleoyl group.

Y⁻ is a chlorine ion or a bromine ion.

Examples of the cationic surfactant (B) used in the present invention include tetradecylamine acetates, octadecylamine acetates, dodecyl trimethylammonium chloride, palm alkyl trimethylammonium chloride, hexadecyl trimethylammonium chloride, octadecyl trimethylammonium chloride, behenyl trimethylammonium chloride, didecyl dimethylammonium chloride, dioleyl dimethylammonium chloride, palm alkyl dimethylbenzylammonium chloride, tetradecyl dimethylbenzylammonium chloride, N,N-diacyloxyethyl N-hydroxyethyl-N-methylammonium-methyl sulfate, ethylenebis-stearic acid amide salts, stearic acid monoamide salts, oleic acid monoamide salts, erucic acid monoamide salts, ethylenebis-oleic acid amide salts, laurylamine salts, palm alkyl amine salts, myristylamine salts, cetylamine salts, stearylamine salts, alkyl-3-aminopropyl ether salts, oleylamine salts, behenylamine salts, dimethyl laurylamine salts, dimethyl palm alkylamine salts, dimethyl myristylamine salts, dimethyl palmitylamine salts, dimethyl stearylamine salts and oleyl propylenediamine salts. The cationic surfactant is not limited to these treating agents.

The coating amount of the cationic surfactant (B) is preferably 0.1 to 10 wt based on the fibrous basic magnesium sulfate. The upper limit of the coating amount of the cationic surfactant (B) is more preferably 8 wt%, much more preferably 5 wt% based on the fibrous basic magnesium sulfate. The lower limit of the coating amount of the cationic surfactant (B) is more preferably 0.3 wt%, much more preferably 0.5 wt% based on the fibrous basic magnesium sulfate.

### <fibrous powder>

The fibrous powder of the present invention has a time from the start of injecting 5.15 mL of 0.1N sulfuric acid to the end of injection of preferably 10 minutes or more, more preferably 15 minutes or more, much more preferably 20 minutes or more in the following acid resistance testing method.

### (acid resistance testing method)

2 mL of 32 °C ethanol and a rotor are put into a beaker heated at 32°C, and the beaker is immersed in a thermostat (32°C) to start stirring. After 1 minute, 0.1 g of a sample is injected into the beaker. One minute after the injection of the sample, 40 mL of 32°C water is injected and a set of a pH meter electrode and a burette is immersed in the beaker. One minute after the injection of water, an automatic titrator (manufactured by DKK-TOA Corporation) is used to add 0.1N sulfuric acid so that the pH of the test slurry always becomes 4.0 and the temperature thereof becomes 32°C. Titration is terminated when 5. 15 mL of 0.1N sulfuric acid is added. Acid resistance is evaluated by a time from the start of adding 5.15 mL of 0.1N sulfuric acid to the end of addition.

### <resin composition>

The resin composition of the present invention comprises 100 parts by weight of a resin and 0.1 to 200 parts by weight of the fibrous powder of the present invention. The upper limit of the content of the fibrous powder is preferably 100 parts by weight, more preferably 50 parts by weight, much more preferably 30 parts by weight based on 100 parts by weight of the resin. The lower limit of the content of the fibrous powder is preferably 0.5 part by weight, more preferably 1 part by weight, much more preferably 3 parts by weight based on 100 parts by weight of the resin.

The method of mixing and kneading the resin with the fibrous powder of the present invention is not particularly limited if they can be mixed together uniformly. They are mixed and kneaded together by means of, for example, a single-screw or double-screw extruder, roll or Banbury mixer. The molding method is not particularly limited and any known molding means may be employed according to the types of the resin and rubber and the type of a desired molded article. Examples thereof include injection molding, extrusion molding, blow molding, press molding, rotational molding, calender molding, sheet forming molding, transfer molding, laminate molding and vacuum molding.

The resin used in the present invention means a resin or rubber, as exemplified by thermoplastic resins such as polyethylene, copolymer of ethylene and another α-olefin, copolymer of ethylene and vinyl acetate, copolymer of ethylene and ethyl acrylate, copolymer of ethylene and methyl acrylate, polypropylene, copolymer of propylene and another α-olefin, polybutene-1, poly4-methylpentene-1, polystyrene, copolymer of styrene and acrylonitrile, copolymer of ethylene and propylene diene rubber, copolymer of ethylene and butadiene, polyvinyl acetate, polylactic acid, polyvinyl alcohol, polyacrylate, polymethacrylate, polyurethane, polyester, polyether, polyamide, ABS, polycarbonate and polyphenylene sulfide. And, thermosetting resins such as phenol resin, melamine resin, epoxy resin, unsaturated polyester resin and alkyd resin may also be used. Further, EPDM, SBR, NBR, butyl rubber, chloroprene rubber, isoprene rubber, chlorosulfonated polyethylene rubber, silicon rubber, fluorine rubber, chlorinated butyl rubber, brominated butyl rubber, epichlorohydrin rubber and chlorinated polyethylene may also be used. Propylene homopolymers and copolymers are particularly preferred.

The resin composition of the present invention may comprise a conventionally known reinforcing agent such as magnesium hydroxide, talc, mica or glass fiber besides the fibrous powder. The content of the reinforcing agent is preferably 1 to 50 parts by weight, more preferably 3 to 40 parts by weight, much more preferably 5 to 30 parts by weight based on 100 parts by weight of the resin.

In addition to the reinforcing agent, other commonly used additives including antioxidant, ultraviolet absorbent, lubricant, delustering agent such as particulate silica, pigment such as carbon black and flame retardant such as bromine-based flame retardant or phosphate-based flame retardant may be suitably selected and used. A flame retarding aid such as zinc stannate, alkali metal stannate or carbon powder and a filler such as calcium carbonate may be suitably selected and used. As for the preferred contents of these additives, 0.01 to 5 parts by weight of an antioxidant, 0.01 to 5 parts by weight of an ultraviolet absorbent, 0.1 to 5 parts by weight of a lubricant, 0.01 to 5 parts by weight of a delustering agent, 0.01 to 5 parts by weight of a pigment, 0.1 to 50 parts by weight of a flame retardant, 0.01 to 10 parts by weight of a flame retarding aid and 1 to 50 parts by weight of a filler may be used based on 100 parts by weight of the resin.

The present invention includes a molded product of the above resin composition.

### <production of fibrous powder>

The fibrous powder of the present invention can be produced by the following steps:
(i) dispersing the fibrous basic magnesium sulfate in water, an organic solvent or a mixture thereof to prepare slurry;
(ii) adding any one of an anionic surfactant (A) treatment solution and a cationic surfactant (B) treatment solution to the slurry under agitation; and
(iii) adding the other treatment solution to the slurry under agitation.

### (preparation of slurry)

The fibrous basic magnesium sulfate is as described above. Examples of the organic solvent include ethanol and 2-propanol. The concentration of the fibrous basic magnesium sulfate in the slurry is preferably 1 to 100 g/L, more preferably 3 to 80 g/L, much more preferably 5 to 60 g/L.

### (coating with anionic surfactant (A))

The anionic surfactant (A) treatment solution is prepared by dissolving or dispersing the anionic surfactant (A) in water, an organic solvent or a mixture thereof. Examples of the organic solvent include ethanol and 2-propanol. The concentration of the anionic surfactant (A) in the anionic surfactant (A) treatment solution is preferably 0.1 to 20 g/L, more preferably 0.5 to 15 g/L, much more preferably 1 to 10 g/L. The treatment temperature is preferably 40 to 100°C, more preferably 45 to 95°C, much more preferably 50 to 90°C.

The amount of the anionic surfactant (A) added is preferably 0.1 to 10 wt% based on the fibrous basic magnesium sulfate. The upper limit of the amount of the anionic surfactant (A) added is preferably 8 wt%, more preferably 5 wt% based on the fibrous basic magnesium sulfate. The lower limit of the amount of the anionic surfactant (A) added is preferably 0. 5 wt%, more preferably 1 wt% based on the fibrous basic magnesium sulfate.

### (coating with cationic surfactant (B))

The cationic surfactant (B) treatment solution is prepared by dissolving or dispersing the cationic surfactant (B) in water, an organic solvent or a mixture thereof. Examples of the organic solvent include ethanol and 2-propanol. The concentration of the cationic surfactant (B) in the cationic surfactant (B) treatment solution is preferably 0.1 to 20 g/L, more preferably 0.5 to 15 g/L, much more preferably 1 to 10 g/L. The treatment temperature is preferably 10 to 100°C, more preferably 15 to 95°C, much more preferably 20 to 90°C.

The amount of the cationic surfactant (B) added is preferably 0.1 to 10 wt% based on the fibrous basic magnesium sulfate. The upper limit of the amount of the cationic surfactant (B) added is preferably 8 wt%, more preferably 5 wt% based on the fibrous basic magnesium sulfate. The lower limit of the amount of the cationic surfactant (B) added is preferably 0.3 wt%, more preferably 0.5 wt% based on the fibrous basic magnesium sulfate.

For coating, the order of coating the anionic surfactant (A) and the cationic surfactant (B) may be arbitrary. That is, the cationic surfactant (B) may be coated after the anionic surfactant (A), or the anionic surfactant (A) may be coated after the cationic surfactant (B). However, it is preferred that, after the solution containing the cationic surfactant (B) is added to the slurry, the solution containing the anionic surfactant (A) should be added to the slurry.

It is preferred that at least one selected from the group consisting of phosphoric acid esters and higher fatty acids should be used as the anionic surfactant (A) and that at least one selected from the group consisting of dialkyl type quaternary ammoniums salts and amine acetates should be used as the cationic surfactant (B).

### EXAMPLES

The following examples are provided for the purpose of further illustrating the present invention but are in no way to be taken as limiting. Physical properties were measured by the following methods in examples.

### (a) Coating amount of anionic surfactant (A)

### Phosphoric acid ester:

The phosphorus content of a sample was measured from absorbance by using a spectrophotometer. The amount of a phosphoric acid ester coated on the fibrous basic magnesium sulfate was calculated from the phosphorus content.

### Stearic acid:

The amount of stearic acid coated on the fibrous basic magnesium sulfate was calculated by an ether extraction method.

### (b) Coating amount of cationic surfactant (B) Tetradecylamine acetate and dioleyl dimethylammonium chloride:

After the nitrogen content of a sample was extracted by a Kjeldahl method, the nitrogen content was measured from absorbance by using a spectrophotometer. The amount of the cationic surfactant coated on the fibrous basic magnesium sulfate was calculated from the nitrogen content of the sample.

### (c) Acid resistance testing method

2 mL of 32°C ethanol and a rotor are put into a beaker heated at 32°C, and beaker is immersed in a thermostat (32°C) to start stirring. After 1 minute, 0.1 g of a sample is injected into the beaker. One minute after the injection of the sample, 40 mL of 32°C water is injected and a set of a pH meter electrode and a burette is immersed in the beaker. One minute after the injection of water, an automatic titrator (manufactured by DKK-TOA Corporation) is used to add 0.1N sulfuric acid so that the pH of the test slurry always becomes 4.0 and the temperature thereof becomes 32°C. Titration is terminated when 5.15 mL of 0.1N sulfuric acid is added. Acid resistance is evaluated by a time from the start of adding 5.15 mL of 0.1N sulfuric acid to the end of addition. As the time becomes longer, acid resistance becomes more excellent.

### (d) Method of measuring the flexural modulus of resin composition

100 parts by weight of polypropylene, 6 parts by weight of a powder test sample and 12 parts by weight of talc were mixed and melt kneaded together by means of a double-screw extruder at about 180°C to prepare a pellet. The obtained pellet was formed into a test piece having a length of 15 cm, a width of 5 cm and a thickness of 3 mm at about 200°C by using an injection molding machine. This test piece was used to measure the flexural modulus of the resin composition in accordance with JIS. K. 7171.

### (e) Method of testing the coating of a resin molded article containing the test powder

The coating stability and appearance of a resin composition containing the powder test sample were evaluated by an ion exchange water immersion test. A polypropylene primer ("P.P. Primer" of Rock Paint Co., Ltd.) was applied to one side of the test piece produced in the above testing method (d) and dried at 105°C for 30 minutes. After drying, a top coating material ("Planit #800" of Dai Nippon Toryo Co., Ltd.) was applied and dried at 105°C for 30 minutes. The dried test piece was immersed in ion exchange water heated at 40°C in a thermostat for 240 hours to check its coating stability and appearance after immersion. The coating stability and appearance were evaluated by the following methods.

### Coating stability:

After the resin test piece was immersed in ion exchange water, it was dried and cut with a cutter until the cutter reached the base of the resin to form 100 squares measuring 2 mm x 2 mm, and adhesive Cellophane tape was affixed to the surface of the resin and ripped off at 20°C to count the number of remaining squares. ○ means that 100 squares remain, Δ means that 99 to 90 squares remain and × means that 89 or less squares remain.

### Appearance:

After immersion in ion exchange water, the test piece was dried to check the existence of blisters on the coated surface visually. ○ means that there are no blisters, Δ means that there are 1 to 3 blisters and × means that there are 4 or more blisters.

### Reference test

### (methylene blue and naphthol yellow S adsorption test)

Commercially available fibrous basic magnesium sulfate ("MOS· HIGE" of Ube Material Industries, Ltd.) was used to analyze the adsorption sites of the crystal surface. A methylene blue reagent and a naphthol yellow S reagent were each dissolved in ion exchange water to prepare 4 mg/L solutions.

1.0 g of the fibrous basic magnesium sulfate powder was added to 200 mL of each of the prepared 4 mg/L solutions and kept stirred at 700 rpm with a chemical stirrer for 1 hour. After stirring, solid-liquid separation was carried out by centrifuging each of the obtained slurries, and the concentrations of methylene blue and naphthol yellow S were measured with a spectrophotometer. As a result, 0.20 mg of methylene blue and 0.12 mg of naphthol yellow S were adsorbed based on 1.0 g of the fibrous basic magnesium sulfate. Since both methylene blue which is existent as a cation and naphthol yellow S which is existent as an anion in an aqueous solution were adsorbed, it was found that a site having positive charge and a site having negative charge were existent on the crystal surface of the fibrous basic magnesium sulfate. Comparative Example 1

### (preparation of fibrous basic magnesium sulfate powder)

Fibrous basic magnesium sulfate was first synthesized by a conventionally known method. A magnesium hydroxide reagent was suspended in ion exchange water to prepare 635 mL of magnesium hydroxide slurry having a concentration of 138 g/L. 1,253 mL of a sulfuric acid reagent which was adjusted to have a concentration of 0.6 mol/L by using ion exchange water and 3.7 g of fibrous basic magnesium sulfate ("MOS· HIGE" of Ube Material Industries, Ltd.) as a seed crystal were added to this slurry. This slurry was subjected to a hydrothermal treatment in an autoclave at 170°C for 6 hours, and this treated slurry was filtered, washed with water, dried and pulverized to obtain a fibrous basic magnesium sulfate powder sample 1. The average fiber length, average fiber diameter, average aspect ratio and acid resistance of the powder sample 1 are shown in Table 1.

### Example 1

### (surface treatment of fibrous basic magnesium sulfate)

An anion surfactant (A) treatment solution and a cationic surfactant (B) treatment solution were first prepared.

2.7 wt% of phosphoric acid ester ("KMN-1018K" of Sanyo Chemical Industries, Ltd.) was used as the anionic surfactant (A) based the fibrous basic magnesium sulfate. 2.2 mL of 0.2 mol/L NaOH and 50 mL of ion exchange water were added to 0.147 g of the phosphoric acid ester, and the resulting solution was emulsified to prepare the anionic surfactant (A) treatment solution.

1 wt% of tetradecylamine acetate ("Cation MA" of NOF Corporation) was used as the cationic surfactant (B) based on the fibrous basic magnesium sulfate. 0.054 g of the tetradecylamine acetate was diluted with 50 mL of ion exchange water in a measuring cylinder to prepare the cationic surfactant (B) treatment solution.

The powder sample 1 prepared in Comparative Example 1 was suspended in ion exchange water to prepare 700 mL of slurry having a concentration of 7.76 g/L. This slurry was heated at 80°C under agitation, and the anionic surfactant (A) treatment solution heated at 80 °C likewise was added to this slurry and kept stirred for 20 minutes. Thereafter, the cationic surfactant (B) treatment solution heated at 80°C was added and kept stirred for 20 minutes.

The surface treated slurry was filtered, washed with water, dried and pulverized to obtain a fibrous basic magnesium sulfate powder sample 2. The average fiber length, average fiber diameter, average aspect ratio, acid resistance and coating amounts of the powder sample 2 are shown in Table 1.

### Example 2

2.7 wt% of phosphoric acid ester ("KMN-1018K" of Sanyo Chemical Industries, Ltd.) was used as the anionic surfactant (A) based on the fibrous basic magnesium sulfate. 3.3 mL of 0.2 mol/L NaOH and 50 mL of ion exchange water were added to 0.22 g of the phosphoric acid ester, and the resulting solution was emulsified to prepare the anionic surfactant (A) treatment solution.

1 wt% of dioleyl dimethylammonium chloride ("Cation 2-OLR" of NOF Corporation) was used as the cationic surfactant (B) based on the fibrous basic magnesium sulfate. 0.1087 g of a dioleyl dimethylammonium chloride solution (75 wt% of an effective component) was diluted with 50 mL of ion exchange water in a measuring cylinder to prepare the cationic surfactant (B) treatment solution.

The powder sample 1 prepared in Comparative Example 1 was suspended in ion exchange water to prepare 800 mL of slurry having a concentration of 10.19 g/L. This slurry was heated at 80°C under agitation, and the above anionic surfactant (A) treatment solution heated at 80°C likewise was added to this slurry and kept stirred for 20 minutes. Thereafter, the cationic surfactant (B) treatment solution heated at 80°C was added and kept stirred for 20 minutes.

The surface treated slurry was filtered, washed with water, dried and pulverized to obtain a fibrous basic magnesium sulfate powder sample 3. The average fiber length, average fiber diameter, average aspect ratio, acid resistance and coating amounts of the powder sample 3 are shown in Table 1.

### Example 3

1 wt% of dioleyl dimethylammonium chloride ("Cation 2-OLR" of NOF Corporation) was used as the cationic surfactant (B) based on the fibrous basic magnesium sulfate. 0.1279 g of a dioleyl dimethylammonium chloride solution (75 wt% of an effective component) was diluted with 50 mL of ion exchange water in a measuring cylinder to prepare the cationic surfactant (B) treatment solution.

2.7 wt% of phosphoric acid ester ("KMN-1018K" of Sanyo Chemical Industries, Ltd.) was used as the anionic surfactant (A) based on the fibrous basic magnesium sulfate. 3.9 mL of 0.2 mol/L NaOH and 50 mL of ion exchange water were added to 0.259 g of the phosphoric acid ester, and the resulting solution was emulsified to prepare the anionic surfactant (A) treatment solution.

The powder sample 1 prepared in Comparative Example 1 was suspended in ion exchange water to prepare 800 mL of slurry having a concentration of 11.99 g/L. This slurry was heated at 80°C under agitation, and the above cationic surfactant (B) treatment solution heated at 80°C likewise was added to this slurry and kept stirred for 20 minutes. Thereafter, the anionic surfactant (A) treatment solution heated at 80°C was added and kept stirred for 20 minutes.

The surface treated slurry was dehydrated, washed, dried and pulverized to obtain a fibrous basic magnesium sulfate powder sample 4. The average fiber length, average fiber diameter, average aspect ratio, acid resistance and coating amounts of the powder sample 4 are shown in Table 1.

### Example 4

2 wt% of a stearic acid reagent was used as the anionic surfactant (A) based the fibrous basic magnesium sulfate. 2.9 mL of 0.2 mol/L NaOH and 50 mL of ion exchange water were added to 0.163 g of stearic acid to thermally dissolve it so as to prepare the anionic surfactant (A) treatment solution.

1 wt% of dioleyl dimethylammonium chloride ("Cation 2-OLR" of NOF Corporation) was used as the cationic surfactant (B) based on the fibrous basic magnesium sulfate. 0.1087 g of a dioleyl dimethylammonium chloride solution (75 wt% of an effective component) was diluted with 50 mL of ion exchange water in a measuring cylinder to prepare the cationic surfactant (B) treatment solution.

The fibrous basic magnesium sulfate as the powder sample 1 prepared in Comparative Example 1 was suspended in ion exchange water to prepare 800 mL of slurry having a concentration of 10.19 g/L. This slurry was heated at 80°C under agitation, and the anionic surfactant (A) treatment solution heated at 80°C likewise was added to this slurry and kept stirred for 20 minutes. Thereafter, the cationic surfactant (B) treatment solution heated at 80°C was added and kept stirred for 20 minutes.

The surface treated slurry was dehydrated, washed, dried and pulverized to obtain a fibrous basic magnesium sulfate powder sample 5. The average fiber length, average fiber diameter, average aspect ratio, acid resistance and coating amounts of the powder sample 5 are shown in Table 1.

### Comparative Example 2

2.7 wt% of phosphoric acid ester ("KMN-1018K" of Sanyo Chemical Industries, Ltd.) was used as the anionic surfactant (A) based the fibrous basic magnesium sulfate. 2.0 mL of 0.2 mol/L NaOH and 50 mL of ion exchange water were added to 0.14 g of the phosphoric acid ester, and the resulting solution was emulsified to prepare the anionic surfactant (A) treatment solution.

The powder sample 1 prepared in Comparative Example 1 was suspended in ion exchange water to prepare 700 mL of slurry having a concentration of 7.15 g/L. This slurry was heated at 80°C under agitation, and the anionic surfactant (A) treatment solution heated at 80°C likewise was added to this slurry and kept stirred for 20 minutes.

The surface treated slurry was dehydrated, washed, dried and pulverized to obtain a powder sample 6 treated with the anionic surfactant (A) alone. The average fiber length, average fiber diameter, average aspect ratio, acid resistance and coating amount of the powder sample 6 are shown in Table 1.

### Comparative Example 3

2 wt% of a stearic acid reagent was used as the anionic surfactant (A) based on the fibrous basic magnesium sulfate. 2.9 mL of 0.2 mol/L NaOH and 50 mL of ion exchange water were added to 0.163 g of stearic acid to thermally dissolve it so as to prepare the anionic surfactant (A) treatment solution.

The powder sample 1 prepared in Comparative Example 1 was suspended in ion exchange water to prepare 800 mL of slurry having a concentration of 10.19 g/L. This slurry was heated at 80°C under agitation, and the anionic surfactant (A) treatment solution heated at 80°C likewise was added to this slurry and kept stirred for 20 minutes.

The surface treated slurry was dehydrated, washed, dried and pulverized to obtain a powder sample 7 treated with the anionic surfactant (A) alone. The average fiber length, average fiber diameter, average aspect ratio, acid resistance and coating amount of the powder sample 7 are shown in Table 1.

### Comparative Example 4

1 wt% of tetradecylamine acetate ("Cation MA" of NOF Corporation) was used as the cationic surfactant (B) based on the fibrous basic magnesium sulfate. 0.082 g of the tetradecylamine acetate was diluted with 50 mL of ion exchange water in a measuring cylinder to prepare the cationic surfactant (B) treatment solution.

The powder sample 1 prepared in Example 1 was suspended in ion exchange water to prepare 800 mL of slurry having a concentration of 10.19 g/L. This slurry was heated at 80°C under agitation, and the cationic surfactant (B) treatment solution heated at 80°C likewise was added to this slurry and kept stirred for 20 minutes.

The surface treated slurry was dehydrated, washed, dried and pulverized to obtain a powder sample 8 treated with the cationic surfactant (B) alone. The average fiber length, average fiber diameter, average aspect ratio, acid resistance and coating amount of the powder sample 8 are shown in Table 1.

### Comparative Example 5

1 wt% of dioleyl dimethylammonium chloride ("Cation 2-OLR" of NOF Corporation) was used as the cationic surfactant (B) based on the fibrous basic magnesium sulfate. 0.1087 g of a dioleyl dimethyl ammonium chloride solution (75 wt% of an effective component) was diluted with 50 mL of ion exchange water in a measuring cylinder to prepare the cationic surfactant (B) treatment solution.

The powder sample 1 prepared in Comparative Example 1 was suspended in ion exchange water to prepare 800 mL of slurry having a concentration of 10.19 g/L. This slurry was heated at 80°C under agitation, and the cationic surfactant (B) treatment solution heated at 80°C likewise was added to this slurry and kept stirred for 20 minutes.

The surface treated slurry was dehydrated, washed, dried and pulverized to obtain a powder sample 9 treated with the cationic surfactant (B) alone. The average fiber length, average fiber diameter, average aspect ratio, acid resistance and coating amount of the powder sample 9 are shown in Table 1.

**Table 1 (1)**

| | | Comparative Example 1 | Example 1 | Example 2 | Example 3 | Example 4 |
|---|---|---|---|---|---|---|
| Anionic surfactant (A) | Type | none | phosphoric acid ester | phosphoric acid ester | phosphoric acid ester | stearic acid |
| | Coating amount (wt% based on fibrous basic magnesium sulfate) | 0 | 2.6 | 2.5 | 2.5 | 1.9 |
| Cationic surfactant (B) | Type | None | tetradecyl amine acetate | dioleyl dimethylammonium chloride | dioleyl dimethylammonium chloride | dioleyl dimethylammonium chloride |
| | Coating amount (wt% based on fibrous basic magnesium sulfate) | 0 | 0.7 | 0.7 | 0.8 | 0.7 |
| Average fiber length (µm) | | 50.2 | 51.8 | 52.6 | 48.6 | 49.5 |
| Average fiber diameter (µm) | | 0.6 | 0.6 | 0.5 | 0.5 | 0.6 |
| Average aspect ratio (-) | | 65 | 67 | 72 | 61 | 65 |
| Acid resistance (min) | | 3 | 18 | 31 | 37 | 15 |
| Sample No. | | powder sample 1 | powder sample 2 | powder sample 3 | powder sample 4 | powder sample 5 |

**Table 1 (2)**

| | | Comparative Example 2 | Comparative Example 3 | Comparative Example 4 | Comparative Example 5 |
|---|---|---|---|---|---|
| Anionic surfactant (A) | Type | phosphoric acid ester | stearic acid | none | none |
| | Coating amount (wt% based on fibrous basic magnesium sulfate) | 2.6 | 1.9 | 0 | 0 |
| Cationic surfactant (B) | Type | none | none | tetradecylamine acetate | dioleyl dimethylammonium chloride |
| | Coating amount (wt% based on fibrous basic magnesium sulfate) | 0 | 0 | 0.7 | 0.8 |
| Average fiber length (µm) | | 52.3 | 47.2 | 46.6 | 50.0 |
| Average fiber diameter (µm) | | 0.6 | 0.5 | 0.5 | 0.5 |
| Average aspect ratio (-) | | 66 | 65 | 62 | 65 |
| Acid resistance (min) | | 9 | 5 | 5 | 7 |
| Sample No. | | powder sample 6 | powder sample 7 | powder sample 8 | powder sample 9 |

It is understood from Table 1 that the fibrous powder of the present invention has improved acid resistance while it retains a high aspect ratio. It is also understood that the fibrous powder of the present invention has higher acid resistance than the fibrous basic magnesium sulfate treated with the anionic surfactant (A) alone and the fibrous basic magnesium sulfate treated with the cationic surfactant (B) alone.

### Example 5

### (preparation of resin composition)

6 parts by weight of the powder sample 2 prepared in Example 1, 100 parts by weight of polypropylene and 12 parts by weight of talc were mixed and melt kneaded together by means of a double-screw extruder at about 180°C to prepare a pellet. The obtained pellet was formed into a test piece having a length of 15 cm, a width of 5 cm and a thickness of 3 mm at about 200 °C by means of an injection molding machine to obtain a resin sample 1. The flexural modulus of the resin sample 1 is shown in Table 2.

### (coating on resin composition)

A commercially available polypropylene primer ("P.P. Primer" of Rock Paint Co., Ltd.) was applied to half of the surface of the resin sample 1 with a bar coater to a film thickness of 25 µm and dried at 105°C for 30 minutes. After drying, a commercially available top coating material ("Planit #800" of Dai Nippon Toryo Co., Ltd.) was applied to a film thickness of 25 µm with a bar coater and dried at 105 °C for 30 minutes. The dried test piece was immersed in ion exchange water heated at 40°C in a thermostat for 240 hours. After immersion, the coating stability and appearance of the dried test piece were evaluated. The results are shown in Table 2.

### Example 6

A resin composition was prepared by using the powder sample 3 prepared in Example 2 in the same manner as in Example 5 to obtain a resin sample 2. The flexural modulus of the resin sample 2 is shown in Table 2. After a primer and a top coating material were applied to half of the surface of the resin sample 2 in the same manner as in Example 5 and immersed in ion exchange water, the coating stability and appearance of the resin sample 2 were evaluated. The results are shown in Table 2.

### Example 7

A resin composition was prepared by using the powder sample 4 prepared in Example 3 in the same manner as in Example 5 to obtain a resin sample 3. The flexural modulus of the resin sample 3 is shown in Table 2. After a primer and a top coating material were applied to half of the surface of the resin sample 3 in the same manner as in Example 5 and immersed in ion exchange water, the coating stability and appearance of the resin sample 3 were evaluated. The results are shown in Table 2.

### Example 8

A resin composition was prepared by using the powder sample 5 prepared in Example 4 in the same manner as in Example 5 to obtain a resin sample 4. The flexural modulus of the resin sample 4 is shown in Table 2. After a primer and a top coating material were applied to half of the surface of the resin sample 4 in the same manner as in Example 5 and immersed in ion exchange water, the coating stability and appearance of the resin sample 4 were evaluated. The results are shown in Table 2.

### Comparative Example 6

A resin composition was prepared by using the powder sample 1 prepared in Comparative Example 1 in the same manner as in Example 5 to obtain a resin sample 5. The flexural modulus of the resin sample 5 is shown in Table 2. After a primer and a top coating material were applied to half of the surface of the resin sample 5 in the same manner as in Example 5 and immersed in ion exchange water, the coating stability and appearance of the resin sample 5 were evaluated. The results are shown in Table 2.

### Comparative Example 7

A resin composition was prepared by using the powder sample 6 prepared in Comparative Example 2 in the same manner as in Example 5 to obtain a resin sample 6. The flexural modulus of the resin sample 6 is shown in Table 2. After a primer and a top coating material were applied to half of the surface of the resin sample 6 in the same manner as in Example 5 and immersed in ion exchange water, the coating stability and appearance of the resin sample 6 were evaluated. The results are shown in Table 2.

### Comparative Example 8

A resin composition was prepared by using the powder sample 7 prepared in Comparative Example 3 in the same manner as in Example 5 to obtain a resin sample 7. The flexural modulus of the resin sample 7 is shown in Table 2. After a primer and a top coating material were applied to half of the surface of the resin sample 7 in the same manner as in Example 5 and immersed in ion exchange water, the coating stability and appearance of the resin sample 7 were evaluated. The results are shown in Table 2.

### Comparative Example 9

A resin composition was prepared by using the powder sample 8 prepared in Comparative Example 4 in the same manner as in Example 5 to obtain a resin sample 8. The flexural modulus of the resin sample 8 is shown in Table 2. After a primer and a top coating material were applied to half of the surface of the resin sample 8 in the same manner as in Example 5 and immersed in ion exchange water, the coating stability and appearance of the resin sample 8 were evaluated. The results are shown in Table 2.

### Comparative Example 10

A resin composition was prepared by using the powder sample 9 prepared in Comparative Example 5 in the same manner as in Example 5 to obtain a resin sample 9. The flexural modulus of the resin sample 9 is shown in Table 2. After a primer and a top coating material were applied to half of the surface of the resin sample 9 in the same manner as in Example 5 and immersed in ion exchange water, the coating stability and appearance of the resin sample 9 were evaluated. The results are shown in Table 2.

**Table 2 (1)**

| | Example 5 | Example 6 | Example 7 | Example 8 |
|---|---|---|---|---|
| Powder sample 2 (parts by weight) | 6 | - | - | - |
| Powder sample 3 (parts by weight) | - | 6 | - | - |
| Powder sample 4 (parts by weight) | - | - | 6 | - |
| Powder sample 5 (parts by weight) | - | - | - | 6 |
| Polypropylene (parts by weight) | 100 | 100 | 100 | 100 |
| Talc (parts by weight) | 12 | 12 | 12 | 12 |
| Flexural modulus (MPa) | 2002 | 1994 | 2020 | 1964 |
| Coating stability (○/Δ/×) | ○ | ○ | ○ | ○ |
| Appearance (○/Δ/×) | ○ | ○ | ○ | Δ |
| Resin sample No. | Resin sample No. 1 | Resin sample No. 2 | Resin sample No. 3 | Resin sample No. 4 |

**Table 2 (2)**

| | C.Ex.6 | C.Ex.7 | C.Ex.8 | C.Ex.9 | C.Ex.10 |
|---|---|---|---|---|---|
| Powder sample 1 (parts by weight) | 6 | - | - | - | - |
| Powder sample 6 (parts by weight) | - | 6 | - | - | - |
| Powder sample 7 (parts by weight) | - | - | 6 | - | - |
| Powder sample 8 (parts by weight) | - | - | - | 6 | - |
| Powder sample 9 (parts by weight) | - | - | - | - | 6 |
| Polypropylene (parts by weight) | 100 | 100 | 100 | 100 | 100 |
| Talc (parts by weight) | 12 | 12 | 12 | 12 | 12 |
| Flexural modulus (MPa) | 2020 | 1960 | 1980 | 1976 | 2015 |
| Coating stability (O/Δ/×) | × | Δ | × | × | Δ |
| Appearance (○/Δ/×) | × | × | × | × | × |
| Resin sample No. | Resin sample No. 5 | Resin sample No. 6 | Resin sample No. 7 | Resin sample No. 8 | Resin sample No. 9 |

| | | | | | |
|---|---|---|---|---|---|
| C.Ex.: Comparative Example | | | | | |

It is understood from the evaluation results of coating stability and appearance shown in Table 2 that the resin composition of the present invention has improved coating stability as the peeling of the coating material and blisters are suppressed after immersion in ion exchange water. A big difference in flexural modulus among samples is not seen. It is understood from above that the resin composition of the present invention has excellent coating stability while it retains a high flexural modulus.

### Effect of the Invention

The fibrous powder of the present invention has excellent acid resistance. The resin composition of the present invention has a good appearance and excellent coating stability.

## Claims

1. A fibrous powder comprising fibrous basic magnesium sulfate, and an anionic surfactant (A) and a cationic surfactant (B), both coating the surface of the fibrous basic magnesium sulfate.

2. The fibrous powder according to claim 1, wherein the coating amount of the anionic surfactant (A) is 0.1 to 10 wt% based on the fibrous basic magnesium sulfate.

3. The fibrous powder according to claim 1, wherein the coating amount of the cationic surfactant (B) is 0.1 to 10 wt% based on the fibrous basic magnesium sulfate.

4. The fibrous powder according to claim 1 which has an average fiber length of 10 to 100 µm, an average fiber diameter of 0.1 to 2 µm and an average aspect ratio of 10 to 1,000.

5. The fibrous powder according to claim 1, wherein the chemical composition of the fibrous basic magnesium sulfate is Mg₆(OH)₁₀·SO₄·3H₂O.

6. The fibrous powder according to claim 1, wherein the anionic surfactant (A) is at least one selected from the group consisting of carboxylic acid, sulfonic acid, sulfuric acid ester, phosphoric acid ester and salts thereof and has a hydrocarbon group having 10 to 40 carbon atoms as a hydrophobic group.

7. The fibrous powder according to claim 1, wherein the anionic surfactant (A) is at least one selected from compounds represented by the following formulas (1) and (2). 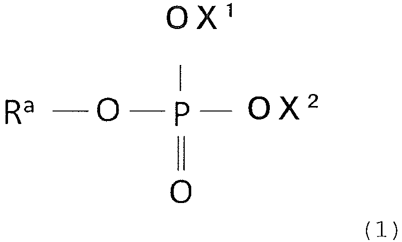 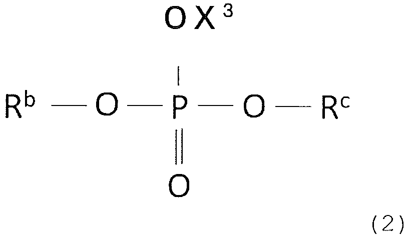 (In the above formulas, R^{a}, R^{b} and R^{c} are the same or different and each a hydrocarbon group having 10 to 40 carbon atoms, and X¹, X² and X³ are the same or different and each a hydrogen atom or an alkali metal atom.)

8. The fibrous powder according to claim 1, wherein the cationic surfactant (B) is at least one selected from the group consisting of amine salts and quaternary ammonium salts and has a hydrocarbon group having 10 to 40 carbon atoms as a hydrophobic group.

9. The fibrous powder according to claim 1, wherein the cationic surfactant (B) is a quaternary ammonium salt represented by the following formula (3). 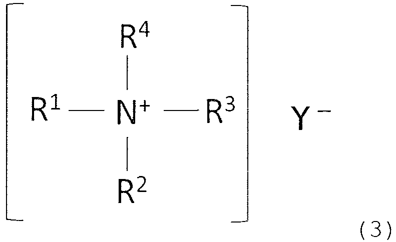 (In the above formula, R¹ and R² are the same or different and each a hydrocarbon group having 1 to 6 carbon atoms, and R³ and R⁴ are the same or different and each a hydrocarbon group having 10 to 40 carbon atoms. Y⁻ is a chlorine ion or a bromine ion.)

10. The fibrous powder according to claim 1, wherein the time from the start of adding 5.15 mL of 0.1N sulfuric acid to the end of addition is 10 minutes or longer in the following acid resistance testing method.
(acid resistance testing method)
2 mL of 32 °C ethanol and a rotor are put into a beaker heated at 32°C, and the beaker is immersed in a thermostat (32°C) to start stirring. After 1 minute, 0.1 g of a sample is injected into the beaker. One minute after the injection of the sample, 40 mL of 32°C water is injected and a set of a pH meter electrode and a burette is immersed in the beaker. One minute after the injection of water, an automatic titrator (manufactured by DKK-TOA Corporation) is used to add 0.1N sulfuric acid so that the pH of the test slurry always becomes 4.0 and the temperature thereof becomes 32°C. Titration is terminated when 5.15 mL of 0.1N sulfuric acid is added. Acid resistance is evaluated by a time from the start of adding 5.15 mL of 0.1N sulfuric acid to the end of addition.

11. A resin composition comprising 100 parts by weight of a resin and 0.1 to 200 parts by weight of the fibrous powder of claim 1.

12. A molded product of the resin composition of claim 11.

13. A process for producing the fibrous powder of claim 1, comprising the steps of:
(i) dispersing fibrous basic magnesium sulfate in water, an organic solvent or a mixture thereof to prepare slurry;
(ii) adding any one of an anionic surfactant (A) treatment solution or a cationic surfactant (B) treatment solution to the slurry under agitation; and
(iii) adding the other treatment solution to the slurry under agitation.

14. The production process according to claim 13, wherein 0.1 to 10 wt% of the anionic surfactant (A) and 0.1 to 10 wt% of the cationic surfactant (B) are added based on the fibrous basic magnesium sulfate.

15. The production process according to claim 13, wherein a solution containing the anionic surfactant (A) is added to the slurry after a solution containing the cationic surfactant (B) is added.
